# EUROPEAN PATENT SPECIFICATION

(11) **EP 0 485 039 B1**
(45) Date of publication and mention of the grant of the patent: **16.02.1994**
(21) Application number: 91202917.0
(22) Date of filing: 08.11.1991
(51) Int. Cl.: A01K 35/00

(54) **Identification ring to be fitted around a leg of an animal**
Identifizierungsring für Tierbeine
Bague d'identification pour patte animale

(30) Priority: 08.11.1990 NL 9002424
(43) Date of publication of application: 13.05.1992
(73) Proprietor: N.V. Nederlandsche Apparatenfabriek NEDAP, NL-7141 DE Groenlo (NL)
(72) Inventor: de Jong, Hendrik Johannes, NL-7141 XJ Groenlo (NL)
(74) Representative: Smulders, Theodorus A.H.J., Ir.

(56) References cited:
- EP-A- 0 364 045
- DE-C- 878 578
- FR-A- 1 119 331
- FR-A- 1 513 574
- GB-A- 5 602

## Description

This invention relates to a ring suitable in particular to be fitted around a leg of an animal.

Such rings can be used for the identification of animals and have long been known. Thus, it is known to ring wild birds within the framework of studies into bird migration, for instance. It is also well known to provide poultry with leg rings. Thus, in chicken farming, chickens can be provided with a ring fitted around a leg. The ring itself may be provided with a number or special colour or the like, but it may also serve as a means of attaching a numbered label and/or a detection means such as an electronic responder to a leg of an animal. Each of the chickens may for instance be provided with a coded electronic responder which is attached to a leg by means of a ring and which can be read in contactless manner by means of an electromagnetic field. The electromagnetic field can for instance be generated by means of an antenna of an interrogation device arranged adjacent a feeding trough. Each chicken can thus be recognized individually and automatically, which makes it possible to guide individual chickens by computer and to design breeding schedules based on the animals that perform best.

The ring used in bird ringing is typically a numbered metal ring fitted around a leg by means of special tongs. A drawback of such a ring is that it has a fixed diameter. If the animal grows after the ring has been fitted, the ring may become too small and grow in. Not only is this painful to the animal, but it can also obstruct the circulation of the blood, thereby impeding further growth. In the ringing of carrier pigeons, a numbered, thin rubber tube is fitted on a leg using a special spreader tool. This ring is removed after each flight and therefore need not follow the growth of the animal.

Here too, however, a problem arises if such a ring were fitted directly after the birth of the animal and were meant to remain in place during further growth. The rubber is too stiff and will grow in.

It will be clear from the above that a fixed, for instance metal, ring cannot be used in view of the further growth of the animal. The rate of growth involved here is considerable. Between the third and seventh week after birth, the circumference of the legs of birds such as chickens increases by more than 50%. Even a rubber ring as used for carrier pigeons does not yield sufficiently to permit it to follow the growth of the animal without difficulty. A rubber ring of even lesser thickness is not strong enough, particularly not if it is to be used as a member for attaching a detection device. One could use a plastic ring which is open on one side, in which the opening has the form of a helical gap. It is true that such a ring allows growth but it can easily be torn loose, resulting in the loss of the ring and a detection device or label, if any, attached by means of the ring.

French patent specification 1513574 discloses a plastic leg ring for poultry comprising a relatively wide cylindrical part of fixed diameter and a plurality of supple lips formed on the inside of this wide part, in which the lips abut the leg of the animal. A drawback of this known leg ring is that the cylindrical part must have a relatively large diameter because it must possible to pass the ring over the foot of the animal. A stiff ring of a relatively large diameter relative to the circumference of the leg of the animal may in practice be cumbersome. Also, such a ring is difficult to manufacture.

Further, German patent specification 878578 discloses a leg ring for poultry comprising a helically wound plastic wire. Such a ring is simple to make and may also have a relatively small diameter but can widen only to a minor extent during the growth of the animal.

The object of the invention is to provide an improved leg ring in which the drawbacks of the known rings are at least partly overcome. More generally, the object of the invention is to provide a reliable leg ring which can be fitted in simple manner, is animal-friendly and simple to manufacture, while the risk of loss is minimal.

To that end, according to the invention, an identification ring suitable to be fitted around a leg of an animal, which ring has a wall made of supple resilient material is characterized in that the ring is corrugated in circumferential direction at least along a part of the circumference.

The invention will now be further described, by way of example, with reference to the accompanying drawings showing some embodiments. In said drawings:
Fig 1 is a schematic cross-section of a first embodiment of a leg ring according to the invention, fitted around a leg of an animal;
Fig 2 is a schematic side elevation of the leg ring of Fig 1; and
Fig 3 is a schematic cross-section of a second embodiment of a leg ring according to the invention.

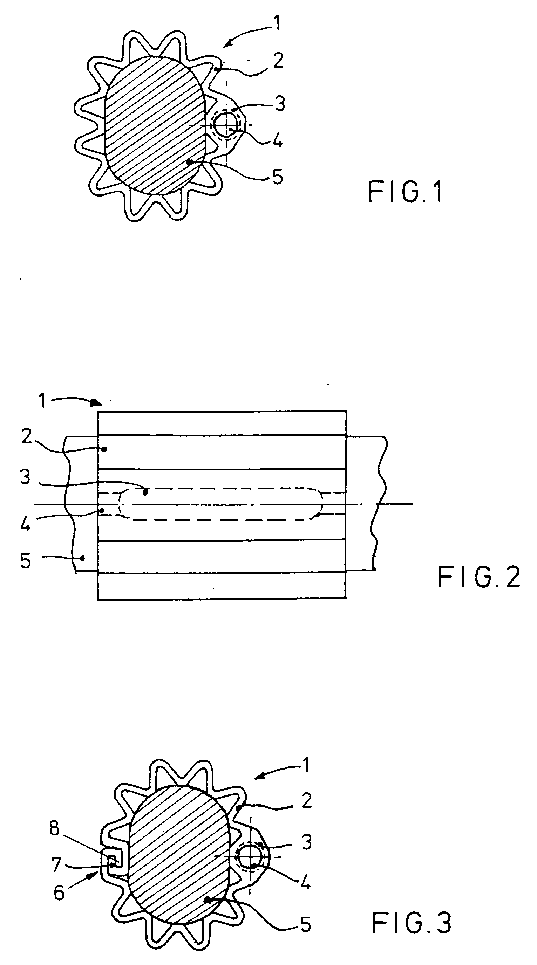

Fig 1 shows a first embodiment of a ring 1 fitted aound a schematically shown leg 5. In circumferential direction the ring has a corrugated or accordion-shaped wall 2. In a simple and inexpensive manner, such a ring can be formed from rubber or a rubbery plastics or another supple material by means of extrusion or injection moulding. It is well known that the spring constant ( = the force per mm extension) of an accordion shape is much smaller than that of a planar plate having the same wall thickness. Thus, even when using the wall thickness that is required to obtain sufficient ruggedness, it is yet possible to obtain a supple extension ( = low spring constant). As a result of the corrugated shape, the clamping force of the ring around the leg 5 increases so little during the growth of the animal that unimpeded growth remains possible and no irritation is caused.

For the ring material, preferably a biocompatible type of rubber or plastics is chosen of the kind that does not age or ages little. For fitting the ring around a leg of an animal, conventional spreader tools, as used for instance in the ringing of carrier pigeons, can be employed. With such tools, the ring is extended so that it can pass the foot whereafter the spreader tool can be removed.

Depending on the use and the strength required, it is possible, as shown in Fig. 3, to form the ring with a lock construction 6. In that case, the ring is supplied in open condition and closed after being fitted around the leg. In that case, a spreader tool can be dispensed with. In the embodiment shown, the lock construction comprises two interlocking terminal ends of the open ring, which ends are of U-shaped cross-section. The edges 7,8 interlock preferably in a slightly clamping manner. Other lock constructions are conceivable. The lock construction is preferably of such design that the parts thereof can be formed as one whole with the rest of the ring by extrusion or injection moulding. For instance, the ring of Fig. 3 including the lock parts 7,8 can be extruded as a corrugated band.

As an example of a detection means, the figures show an electronic detection circuit at 3, which is encapsulated in known manner in a glass or plastic tube which is arranged in a hollow 4 of the ring. It will be clear, however, that a ring according to the invention can also be used for attaching detection means of different form, such as a label, or other objects, such as a pedometer. The detection means may even consist of a number attached to the ring proper.

It is noted that a ring according to the invention can be used not only for poultry but also for larger animals and optionally even for humans as well as for plants and trees.

The ring itself may form a means of identification or serve for attaching separate identification means which may or may not be electronic. An electronic identification device such as a responder may be incorporated into the ring as shown in the figures, but may also hang from the ring. The same applies for instance to a numbered label or the like.

Further, the ring need not be corrugated throughout its circumference. It is also possible to alternate one or more corrugated portions with one or more uncorrugated, at any rate stiffer, portions.

## Claims

1. Identification ring suitable to be fitted around a leg (5) of an animal, which ring (1) has a wall (2) made of supple resilient material characterized in that the ring (1) is corrugated in circumferential direction at least along a part of the circumference.

2. Identification ring according to claim 1, characterized by an identification means (3) incorporated into the ring (1).

3. Identification ring according to claim 2, characterized in that the identification means (3) comprises an electronic responder.

4. Identification ring according to claim 1, characterized by a hollow (4) for receiving an identification means (3).

5. Identification ring according to any one of claims 2-4, characterized in that the identification means (3) is an electronic responder encapsulated in a tube.

6. Identification ring according to any one of the preceding claims, characterized in that the ring (1) is formed from a band-shaped member which is at least partly corrugated, which member comprises lock parts (7,8) at its terminal ends, which lock parts (7,8) interlock in clamping manner.

7. Idenfication ring according to claim 6, characterized in that the lock parts (7,8) are substantially U-shaped in cross-section, one leg of one U-shape being disposed between the legs of the other U-shape in the closed position.

8. Identification ring according to any one of the preceding claims, characterized in that the ring (1) is made of a resilient plastic which is biocompatible and ageing-resistant in the environment of the animal in question.

9. Identification ring according to any one of the preceding claims, characterized in that the ring (1) has been manufactured by extrusion.

10. Identification ring according to any one of claim 1-8, characterized in that the ring (1) has been manufactured by injection moulding.

## Patentansprüche

1. Identifizierungsring, der zum Anbringen um ein Bein (5) eines Tieres geeignet ist, wobei der Ring (1) eine Wand (2) aus biegsamem elastischem Material aufweist, dadurch gekennzeichnet, daß der Ring (1) wenigstens über einen Teil des Umfangs in Umfangsrichtung gewellt ist.

2. Identifizierungsring nach Anspruch 1, gekennzeichnet durch eine in den Ring (1) eingesetzte Identifizierungseinrichtung (3).

3. Identifizierungsring nach Anspruch 2, dadurch gekennzeichnet, daß die Identifizierungseinrichtung (3) einen elektronischen Responder aufweist.

4. Identifizierungsring nach Anspruch 1, gekennzeichnet durch eine Ausnehmung (4) zur Aufnahme einer Identifizierungseinrichtung (3).

5. Identifizierungsring nach einem der Ansprüche 2-4, dadurch gekennzeichnet, daß die Identifizierungseinrichtung (3) ein in einem Rohr gekapselter elektronischer Responder ist.

6. Identifizierungsring nach einem der vorhergehenden Ansprüche, dadurch gekennzeichnet, daß der Ring (1) aus einem bandförmigen Teil gebildet ist, das wenigstens teilweise gewellt ist, wobei das Teil an seinen Enden Verschlußteile (7, 8) aufweist, die klemmend ineinander greifen.

7. Identifizierungsring nach Anspruch 6, dadurch gekennzeichnet, daß die Verschlußteile (7, 8) einen im wesentlichen U-förmigen Querschnitt aufweisen, wobei ein Schenkel eines U im Schließzustand zwischen den Schenkeln des anderen U angeordnet ist.

8. Identifizierungsring nach einem der vorhergehenden Ansprüche, dadurch gekennzeichnet, daß der Ring (1) aus einem elastischen Kunststoff besteht, der in bezug auf die Umgebung des betreffenden Tieres biologisch verträglich und alterungsbeständig ist.

9. Identifizierungsring nach einem der vorhergehenden Ansprüche, dadurch gekennzeichnet, daß der Ring (1) durch Extrusion hergestellt ist.

10. Identifizierungsring nach einem der Ansprüche 1-8, dadurch gekennzeichnet, daß der Ring (1) durch Spritzgießen hergestellt ist.

## Revendications

1. Bague d'identification pour patte (5) d'animal, ladite bague (1) présentant une paroi (2) faite à partir d'une matière souple résiliente, caractérisée en ce que la bague (1) est ondulée dans le sens de sa circonférence au moins le long d'une partie de la circonférence.

2. Bague d'identification selon la revendication 1, caractérisée par des moyens d'identification (3) incorporés dans la bague (1).

3. Bague d'identification selon la revendication 2, caractérisée en ce que les moyens d'identification (3) comprennent un répondeur électronique.

4. Bague d'identification selon la revendication 1, caractérisée par une cavité (4) destinée à recevoir des moyens d'identification (3).

5. Bague d'identification selon l'une des revendication 2 à 4, caractérisée en ce que les moyens d'identification (3) sont un répondeur électronique enrobé dans un tube.

6. Bague d'identification selon l'une des revendications précédentes, caractérisée en ce que la bague (1) est formée à partir d'un élément en forme de bande qui est au moins en partie ondulé, ledit élément comprenant des parties de verrouillage (7, 8) en ses extrémités terminales, lesdites parties de verrouillage (7, 8) se verrouillant réciproquement par serrage ou clippage.

7. Bague d'identification selon la revendication 6, caractérisée en ce que les parties de verrouillage (7, 8) ont essentiellement une forme de U en coupe transversale, une des jambes d'une des formes en U étant disposée entre les jambes de l'autre forme en U en position fermée.

8. Bague d'identification selon l'une des revendications précédentes, caractérisée en ce que la bague (1) est faite à partir d'une matière plastique résiliente qui est biocompatible et résistante à l'usure dans l'environnement de l'animal en question.

9. Bague d'identification selon l'une des revendications précédentes, caractérisée en ce que la bague (1) a été fabriquée par extrusion.

10. Bague d'identification selon l'une des revendications 1 à 8, caractérisée en ce que la bague (1) a été fabriquée par moulage par injection.
